(19) Europäisches Patentamt
European Patent Office
Office européen des brevets

(11) **EP 2 182 297 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(51) Int Cl.:
***F24D 19/10*** *(2006.01)* ***G05D 23/19*** *(2006.01)*

(21) Anmeldenummer: **09174101.7**

(22) Anmeldetag: **27.10.2009**

(54) **Verfahren und Vorrichtung zur wärmebedarfsgeführten Adaption der Vorlauftemperatur einer Heizungsanlage**

Method and device for heat requirement controlled adaption of the supply temperature of a heating device

Procédé et dispositif d'adaptation orientée vers le besoin en chaleur de la température d'entrée d'une installation de chauffage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.10.2008 DE 102008054043**

(43) Veröffentlichungstag der Anmeldung:
**05.05.2010 Patentblatt 2010/18**

(73) Patentinhaber: **Techem Energy Services GmbH
65760 Eschborn (DE)**

(72) Erfinder:
• **Gutmann, Norbert**
**64295 Darmstadt (DE)**
• **Kähler, Dr. Arne**
**12683 Berlin (DE)**
• **Klein, Joachim**
**65760 Eschborn (DE)**
• **Ohl, Jochen**
**64823 Groß-Umstadt (DE)**
• **Schulz, Hans-Jürgen**
**61381 Friedrichsdorf (DE)**

(74) Vertreter: **Keil & Schaafhausen
Patent- und Rechtsanwälte PartGmbB
Friedrichstrasse 2-6
60323 Frankfurt am Main (DE)**

(56) Entgegenhaltungen:
**EP-A1- 1 645 928       DE-A1- 10 217 272
DE-B3-102006 013 098**

**Beschreibung**

Die Erfindung betrifft ein Verfahren und eine Vorrichtung zur wärmebedarfsgeführten Adaption der vorzugsweise außentemperaturgeführten Vorlauftemperatur einer Heizungsanlage gemäß dem Obergebegriff der Ansprüche 1 und 9. In der Heizungsanlage werden der Massestrom durch die gesamte Heizungsanlage oder einzelne Heizkreise der Heizungsanlage und die zugehörige Rücklauftemperatur der gesamten Heizungsanlage oder der einzelnen Heizkreise gemessen. Aus diesen Messwerten wird eine Wärmebedarfstendenz ermittelt, auf deren Grundlage die Vorlauftemperatur der Heizungsanlage und/oder der einzelnen Heizkreise vorgegeben wird, indem bei steigendem Wärmebedarf mit einer steigenden Vorlauftemperatur und bei fallendem Wärmebedarf mit einer sinkenden Vorlauftemperatur reagiert wird.

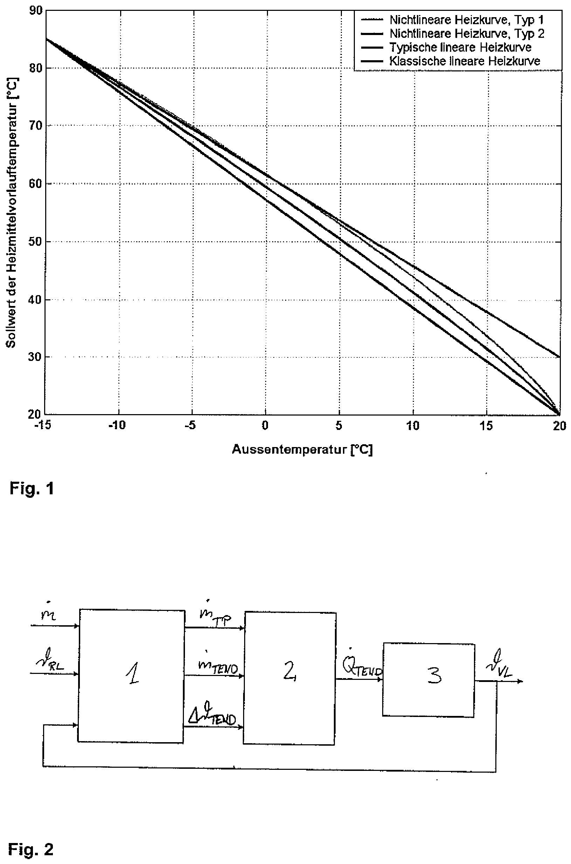

Bei einer überwiegenden Zahl der heute üblichen Heizungsanlagen zur Wärmeversorgung von Gebäuden wird der Sollwert der Vorlauftemperatur des Heizmittels in Abhängigkeit von der Außentemperatur nach den Vorgaben einer stationären Heizkurve geführt, wie sie in Fig. 1 für verschiedene Heizkurventypen dargestellt ist, die sich jedoch nur marginal unterscheiden. Danach steigt mit fallender Außentemperatur der Sollwert der Heizmittelvorlauftemperatur, um dem bei niedrigen Außentemperaturen erhöhten Wärmebedarf Rechung zu tragen.

Werden neben der Außentemperatur keine weiteren Führungsgrößen zur Regelung der Vorlauftemperatur berücksichtigt, führt die rein außentemperaturgeführte Heizungsregelung häufig zu einem signifikanten Unterschied zwischen der momentan bereitgestellten Heizleistung und dem tatsächlichen (aktuellen) Gebäudewärmebedarf. Die Folge sind in der Praxis meistens zu hohe Systemtemperaturen, aus denen sowohl unnötige Energieverteilungsverluste als auch

Überheizungszustände der Räume resultieren, und die so einen deutlichen Energiemehrverbrauch nach sich ziehen. Zu geringe Systemtemperaturen, die in realen Heizungsanlagen aufgrund der damit verbundenen Komforteinbußen jedoch nur selten vorkommen, führen zu nicht ausreichenden Beheizungszuständen der Räume, also zu nicht erwünschtem Diskomfort.

Daher wurden bereits Heizungsanlagen und Heizungsregelungen zum Steuern der Heizungsanlage vorgeschlagen, die Informationen aus dem Gebäude nutzen, um den tatsächlichen Wärmebedarf des Gebäudes zu ermitteln und die Vorlauftemperatur an diesen tatsächlichen Wärmebedarf anzupassen.

Aus der EP 0 282 886 B1 ist beispielsweise ein Verfahren zur Führung des Sollwertes der Vorlauftemperatur in Heizungsanlagen bekannt, bei dem der aktuelle Wärmeverlust in dem Heizkreis aus den stetig gemessenen physikalischen Größen Vorlauftemperatur, Rücklauftemperatur und Volumenstrom errechnet wird. Der Sollwert der Vorlauftemperatur wird dann aus dem errechneten Wärmeverlustsrom im Heizkreis unter Berücksichtigung eines dreidimensionalen Laststufenfeldes (Kennlinienfeld) ermittelt. Neben der teilweise recht aufwendigen Erfassung von drei Messgrößen besteht insbesondere der Nachteil, dass das zu berechnende Laststufenfeld gebäudespezifisch ist und nicht universell eingesetzt werden kann.

Aus der EP 0 308 848 B2 sind ein Verfahren und eine Vorrichtung zur Steuerung der Temperatur des Heizmediums einer Umlaufheizung mit einer Minimaltemperaturbegrenzung bekannt. Bei dem dort vorgeschlagenen System wird in Abhängigkeit von der gemessenen Außentemperatur und der Heizmittelvorlauftemperatur unter Berücksichtigung einer Minimaltemperatur des Heizmittelvorlaufs sowohl die elektrische Leistung der Heizmittelumwälzpumpe als auch die thermische Leistung des Heizungsbrenners mit dem Ziel angepasst, den Heizungsbrennerbetrieb möglichst selten zu unterbrechen. Zu diesem Zweck wird der Sollwert des Heizmittelvorlaufs in Abhängigkeit der Außentemperatur gemäß einer klassischen Heizkurve eingestellt. Bei Annäherung der Heizmittelvorlauftemperatur an die Minimaltemperatur erfolgt eine Verringerung der elektrischen Leistung der Umwälzpumpe mittels einer Drehzahlreduzierung und außerdem eine Verringerung der thermischen Leistung des Brenners mittels Hubänderung des Brennstoffzufuhrventils. Eine Adaption der Wärmeleistung erfolgt also nur im Bereich der Minimaltemperatur. Bei höheren Temperaturen erfolgt die Führung der Vorlauftemperatur in klassischer Weise anhand der in Fig. 1 dargestellten Heizungsfahrkurve.

Die EP 0 260 343 B1 beschreibt ein Verfahren und eine Vorrichtung zur Temperaturregelung von Heizungs- und Kühlanlagen, nach denen die Solltemperatur einer Wärme- bzw. Kältequelle in Abhängigkeit von einer als a priori bekannt vorausgesetzten Außentemperatur und beispielsweise der Raumlufttemperatur als weiterer gemessener Referenztemperatur geführt wird. Es erfolgt eine Auswertung der Aufheiz- und Abkühlgeschwindigkeit des Wärme- bzw. Kältemediums, um daraus eine weitere Korrektur des Sollwertes der Wärme- bzw. Kältequelle vorzunehmen. Um auf einen Außentemperaturfühler verzichten zu können, wird vorgeschlagen, die Außentemperatur aus z.B. statistischen Auswertungen von verfügbaren Außentemperaturverläufen zu ermitteln, was jedoch sehr unzuverlässig und angesichts der vergleichsweise niedrigen Installationskosten eines Außentemperaturfühlers auch unrentabel ist, da durch die Abschätzung der Außentemperatur Fehlregelungen der Heizungsanlage nicht ausgeschlossen werden können.

Verfahren zur wärmebedarfsgeführten Vorlauftemperaturadaption, die einen Kommunikationsverbund nutzen, sind beispielsweise in S. Baumgarth "Strategien zur energieoptimalen Heizungsregelung", HLH 1991, Seite 315-318, und "Regelungsstrategien für Einzelraumregelung", ATP, Nr. 37, 1995, Seite 29-35, vorgestellt. Danach kann die tatsächlich angeforderte Heizlast eines Raumes aus der Heizkörperventilstellung ermittelt werden, die aus den Positionsrückmeldungen einer elektronischen, busfähigen Einzelraumregelung gewonnen wird. Zur Führung des Sollwerts der Vorlauftemperatur wird dann der Raum mit dem größten Ventilhub ausgewählt und der Sollwert der Vorlauftemperatur so eingestellt, dass der größte Ventilhub 90% beträgt. Auf eine außentemperaturgeführte Steuerung nach einer Heizungsfahrkurve wird verzichtet. Nachteilig an dieser Lösung ist, dass zur Führung des Vorlauftemperatursollwertes nur der Raum ausgewählt wird, der momentan den größten Heizkörperventilhub liefert. Das führt insbesondere in Mehrfamilienhäusern dazu, dass sich die thermische Leistung der gesamten Heizungsversorgung an dem Raum mit dem höchsten thermischen Leistungsbedarf orientiert, woraus hohe Systemtemperaturen und erhöhte konvektive Verluste und Strahlungswärmeverluste resultieren.

Weitere Verfahren, die die Hubposition des Heizkörperventils mit größtem Ventilhub auswerten, sind in dem Aufsatz s. Baumgarth "Einzelraumregelungen mit dem EIB", HLH 2000, S. 42-47 dargestellt. In Analogie zu dem vorstehend beschriebenen Verfahren wird vorgeschlagen, den Raum als Führungsraum auszuwählen, dessen Heizkörper einen Ventilhub von 100% meldet. Außerdem wird vorgeschlagen, den Sollwert der Vorlauftemperatur in äquidistanten Zeitschritten um einen festen Betrag zu senken bzw. zu heben und in Abhängigkeit der Regelabweichung der Raumtemperatur im Führungsraum die Steigung der Heizungsfahrkurve zu verändern oder auch eine Parallelverschiebung der Heizkurve durchzuführen. Auch hier wird zur Führung des Vorlauftemperatursollwertes wieder nur der Raum ausgewählt, der momentan den größten Heizkörperventilhub liefert.

Weitere Verfahren zur Adaption der Wärmeleistung in Heizungsanlagen unter Nutzung eines Kommunikationsverbundes sind in der EP 1 456 727 B1 und der EP 1 645 928 A1bekannt, bei denen die Ventilstellung bzw. die Information von (Funk-)Heizkostenverteilern verwendet werden, um den aktuellen Versorgungszustand der Heizfläche unter Anwendung einer komplexen Fuzzy-Logik zu ermitteln. Aus den Heizflächenversorgungszuständen der einzelnen Heizflächen wird ebenfalls mit einer Fuzzy-Logik der Gebäudeversorgungszustand bestimmt und in dessen Abhängigkeit die Vorlauftemperatur korrigiert. Der Vorlauftemperatursollwert setzt sich bei diesem Verfahren aus einem außentemperaturgeführten und einem wärmebedarfsgeführten Anteil zusammen. Eine Anwendung dieser Verfahren bei Heizungsanlagen, die nicht über den benötigten Kommunikationsverbund verfügen, ist aufgrund der zu installierenden Komponenten jedoch aufwendig.

In dem Aufsatz D. Pfannstiehl, "Einsatz adaptiver und Fuzzy-basierter Regelungsstrategien in der Heizungstechnik", ATP, 1995, S. 42-49 wird ein Verfahren zur wärmebedarfsgeführten Wärmeleistungsadaption mittels Führung des Vorlauftemperatursollwertes für Kesselsteuerungen vorgestellt, das die dynamische Änderung der Kesseltemperatur bewertet und daraus den momentanen und den durchschnittlichen Energieverbrauch sowie die Wärmetendenz ermittelt. Mittels einer komplexen Fuzzy-Logik mit 405 Regeln wird der momentane Wärmebedarf und schließlich ein Vorlauftemperatursollwert bestimmt.

In der Veröffentlichung J. Ohl, "Untersuchung verschiedener Regelungskonzepte für Heizungsanlagen mit Brennwertkesseln", Forschungsberichte VDI, Reihe 6, Nr. 429, Dissertation, Technische Universität Darmstadt, 1999, wird ein ähnliches Verfahren beschrieben. Ausgehend von dem zu messenden Heizmittelvolumenstrom und der zu messenden Heizmittelrücklauftemperatur wird unter Berücksichtigung des Vorlauftemperatursollwertes mittels Fuzzy-Logik (27 Regeln) auf die aktuelle Wärmebedarfstendenz geschlossen, aus der ein aktueller korrigierter Sollwert der Vorlauftemperatur berechnet wird.

Dieses vom Prinzip her auch der vorliegenden Erfindung zugrunde liegende Regelverfahren wird in Bezug auf Fig. 2 näher erläutert, welche ein Blockdiagramm eines Wärmebedarfstendenz-Reglers mit den einzelnen Modulen Signalaufbereitung 1, Fuzzy-Regler 2 und Sollwertberechnung 3 darstellt. Eingangsgrößen sind der beispielsweise in einem Wärmezähler gemessene Massestrom bzw. Volumenstrom m und die Rücklauftemperatur $\vartheta_{RL}$ der Heizungsanlage bzw. eines Heizkreises. Aus diesen Größen werden in der Signalaufbereitung 1 ein tiefpassgefilterter Massestrom $\dot{m}_{TP}$ ermittelt, der anschließend mit einer bestimmten Abtastzeit abgetastet wird. Differenzenbildung zwischen zwei aufeinanderfolgenden Abtastwerten liefert die Massestromtendenz $\dot{m}_{TEND}$. Ferner wird die aus einem Vorlauftemperatursollwert $\vartheta_{VLSoll}$ und der Rücklauftemperatur $\vartheta_{RL}$ gebildete Differenz tiefpassgefiltert und in einer bestimmten Abtastzeit abgetastet. Die Differenz zweier aufeinanderfolgender Abtastwerte entspricht der Spreizungstendenz $\Delta\vartheta_{TEND}$, die aussagt, ob die Spreizung zwischen zwei Abtastschritten gestiegen, gefallen oder unverändert ist. Diese Werte werden mittels einer Fuzzy-Logik in dem Fuzzy-Regler 2 auswertet, um die Wärmebedarfstendenz $\dot{Q}_{TEND}$ zu ermitteln, welche einer Sollwertberechnung 3 des Wärmebedarfstendenz-Reglers zugeführt wird, um die Vorlauftemperatur $\vartheta_{VL}$ zu bestimmen, welche verwendet wird, um die aus der Heizungsfahrkurve gewonnene Vorlaufsolltemperatur $\vartheta_{VLSoll}$ gegebenenfalls zu korrigieren, indem bei steigendem Wärmebedarf mit einer steigenden Vorlauftemperatur $\vartheta_{VL}$ und bei fallendem Wärmebedarf mit einer sinkenden Vorlauftemperatur $\vartheta_{VL}$ reagiert wird. Dabei besteht jedoch das Problem, dass nur auf Veränderungen des Wärmebedarfs reagiert wird und das absolute Niveau des Wärmebedarfs nicht ermittelt werden kann. Dies kann zu einem zu starken Absenken der Vorlauftemperatur $\vartheta_{VL}$ und damit zu Diskomfort-Zuständen führen.

Die DE 10 2006 013 098 B3 beschreibt ein Verfahren und eine Vorrichtung zur bedarfsgeführten Wärmebereitstellung in einer Heizungsanlage, der in Abhängigkeit von einer externen Führungsgröße eine vorgegebene Wärmeleistung bereit gestellt wird. Die bereitgestellte Wärmeleistung hängt zusätzlich von dem Wärmebedarf der Heizungsanlage ab, indem bei der Abhängigkeit von der externen Führungsgröße Korrekturwerte berücksichtigt werden, die in Abhängigkeit von der externen Führungsgröße aus einer Korrekturkurve bestimmt werden.

Aufgabe der vorliegenden Erfindung ist es daher, bei dem Regelverfahren der Eingangs genannten Art Diskomfort-Zustände durch ein zu weites Absenken der Vorlauftemperatur zu vermeiden.

Diese Aufgabe wird mit den Merkmalen der Ansprüche 1 und 9 gelöst. Dazu wird erfindungsgemäß vorgeschlagen, dass für den Fall einer sinkenden Vorlauftemperatur eine Absenkungsgrenze ermittelt wird, um welche die Vorlauftemperatur maximal abgesenkt wird. In der einfachsten Ausgestaltung der vorliegenden Erfindung wird die Absenkgrenze als Konstante vorgegeben. Beispielsweise kann eine maximale Absenktemperatur für die Vorlauftemperatur bei etwa 6 K vorgegeben werden, um welche die Vorlauftemperatur aus einem geregelten Zustand abgesenkt wird. Bei einer vernünftig eingestellten Heizung führt dies zu keinen starken Komforteinbußen, auch wenn die Absenkung größer ist als es der Heizungssituation angemessen wäre. Nach einer zu starken Absenkung erkennt das System in der Tendenz einen steigenden Wärmebedarf und wirkt der zu starken Absenkung entgegen. Eine alternative, ebenfalls sinnvolle konstante Absenkungsgrenze kann durch eine fest definierte maximale Unterschreitung der durch die außentemperatur- bzw. witterungsgeführte Regelung vorgegebenen Vorlauftemperatur liegen. Auch in diesem Fall liegt eine sinnvolle konstante Absenkungsgrenze im Sinne einer Unterschreitung des durch die Heizungsfahrkurve vorgegebenen Vorlauftemperaturwerts zwischen 5 bis 10 K, die einen Ausgleich zwischen Energieeinsparung andererseits und erreichtem Komfort andererseits bietet. Gegebenenfalls kann eine "konstante" Absenkungsgrenze auch in Abgängigkeit von der Außentemperatur geführt oder relativ zu dem durch die Heizungsfahrkurve vorgegebenen Vorlauftemperaturwert definiert werden.

Eine bessere Wärmeadaption lässt sich erfindungsgemäß erreichen, indem eine Änderung der Messgröße Massestrom, Rücklauftemperatur und/oder daraus abgeleiteter Größen nach einer Änderung der Vorlauftemperatur erfasst und ausgewertet wird, um die Absenkungsgrenze der Vorlauftemperatur zu ermitteln. Der Massestrom und die Rücklauftemperatur in einem Heizkreis bzw. der gesamten Heizungsanlage sowie daraus abgeleitete Größen erlauben es, bei einer Vorlauftemperaturänderung Erwartungen über eine Reaktion dieser Messgrößen in Abhängigkeit von dem Wärmebedarf der Heizungsanlage zu treffen. Dazu können erfindungsgemäß Regeln für ein erwartetes Verhalten in bestimmten Zuständen der Heizungsanlage vorgegeben und mit den tatsächlichen Messwerten verglichen werden. Dies erlaubt zuverlässige Aussagen darüber, ob die Vorlauftemperatur über eine sinnvolle Absenkungsgrenze hinaus abgesenkt wurde, so dass einer derartigen Absenkung entgegengewirkt werden kann, bevor in einem beheizten Gebäude Diskomfort-Zustände auftrete. Dabei kann auch eine Kombination mehrerer Messgrößen sowie gegebenenfalls daraus abgeleiteter Größen ausgewertet werden, die durch eine gemeinsame Betrachtung zuverlässigere Aussagen bieten können als einzelne Messwerte.

Als abgeleitete Größen kann das Verhältnis aus dem aktuellen Massestrom und einem Nennmassestrom und/oder das Verhältnis aus der aktuellen Wärmeleistung und einer erwarteten Wärmeleistung ausgewertet werden, um die Absenkungsgrenze der Vorlauftemperatur zu ermitteln. Der Nennmassestrom kann dazu beispielsweise im Schleppzeigerprinzip ermittelt werden, indem der jeweils größte herrschende Massestrom in der Heizungsanlage bzw. dem Heizkreis gespeichert wird. Um dynamische Änderungen in dem System beispielsweise durch dauerhafte Stilllegung einzelner Heizflächen (Abdrehen der Heizungsventile) zu berücksichtigen, kann der im Schleppzeigerprinzip ermittelte Nennmassestrom vorzugsweise jeweils über einen zurückliegenden Zeitraum von etwa einem Monat gleitend ermittelt werden. Für das Verhältnis der aktuellen Wärmeleistung zu einer erwarteten Wärmeleistung kann die aktuelle Wärmeleistung aus einem Wärmemengenzähler abgelesen werden, der die Größen Vorlauftemperatur, Rücklauftemperatur und Massestrom misst. Die erwartete Wärmeleistung ergibt sich aus der Heizkörper-Nennwärmeleistung, die als Summe der in der Heizungsanlage verbauten Heizkörper-Nennwärmeleistungen bekannt ist und für die Auslegungs-Raumtemperatur und die Auslegungs-Außentemperatur gilt. Durch Messung der aktuellen Außentemperatur, die bei einer außentemperaturgeführten Heizungsregelung ohnehin bekannt ist, und Messung bzw. Abschätzung der aktuellen Raumtemperatur kann somit auf die erwartete Wärmeleistung geschlossen werden. Das Verhältnis von aktuellem Massestrom zu Nennmassenstrom bzw. von aktueller Wärmeleistung zu erwarteter Wärmeleistung bietet einen guten Anhaltspunkt für die Ermittlung der Absenkungsgrenze der Vorlauftemperatur, auch unabhängig von einer Beobachtung der zeitlichen Änderung der Messgrößen Massestrom und Rücklauftemperatur.

Durch Kombination dieser Messmethoden kann die Zuverlässigkeit bei der Ermittlung der Absenkgrenze weiter verbessert werden.

Um zu ermitteln, ob die Heizkörper gleichmäßig durchströmt sind, ist erfindungsgemäß vorgesehen, das Verhältnis aus der gemessenen Rücklauftemperatur und einer für den Fall berechneten Rücklauftemperatur zu bilden, dass alle Heizkörper in der gesamten Heizungsanlage oder einem Heizkreis einen virtuellen Heizkörper bilden. Sofern die gemessene Rücklauftemperatur und für den speziellen Fall berechnete Rücklauftemperatur übereinstimmen, deutet dies auf eine in etwa gleichmäßige Durchströmung aller Heizkörper hin, so dass sich ein Absenkpotential für die Vorlauftemperatur bildet. Bei Abweichungen liegen dagegen sehr unterschiedliche hydraulische Verhältnisse an den einzelnen Heizkörpern vor, die weniger Absenkpotential für die Vorlauftemperatur bieten. Die Höhe einer sinnvollen Absenkung kann dann beispielsweise aus dem Massestromverhältnis abgeleitet werden.

Gemäß einer bevorzugten Weiterentwicklung des vorgeschlagenen Verfahrens können durch Auswertung des zeitlichen Verlaufs des Massestroms und/oder der Leistung Absenkzeiten der Vorlauftemperatur der Heizungsanlage beispielsweise an dem Heizkessel selbst und/oder ein typisches Nutzerverhalten erkannt werden. Daraus kann zeitlich prädiktiv ein steigender oder fallender Wärmebedarf vorhergesagt werden, der bereits vor dem Erkennen von Wärmetendenzen angewendet werden kann, um eine wärmeadaptive Regelung zu realisieren. Sofern die prädikativen Wärmetendenzen nicht mit den realen Wärmetendenzen übereinstimmen, wird durch das Erkennen zuwiderlaufender Wärmetendenzen in der realen Anlage die durch die prädikative Vorlauftemperaturänderung vorgegebene Beeinflussung der Heizungsanlage korrigiert.

Gemäß einem auch eigenständigen Aspekt der Erfindung wird erfindungsgemäß vorgeschlagen, inaktive Heizkörper bei der Adaption der Vorlauftemperatur nicht zu berücksichtigen. Dazu werden Heizkörper, deren Ventile vollständig geschlossen sind, nicht berücksichtigt. Bei Einzelraumtemperaturregelungen mit motorischen Stellantrieben oder Ventilstellungsdetektoren liegen diese Daten unmittelbar vor. Ein derartiges Vorgehen eignet sich auch bei den in der EP 1 456 727 B1 bzw. der EP 1 645 928 A1 beschriebenen wärmebedarfsgeführten Regelung der Vorlauftemperatur durch kennlinienbasierte Ermittlung von Versorgungszuständen aufgrund von Ventilstellungen bzw. Daten der Heizkostenverteiler.

Zur Erkennung inaktiver Heizkörper können insbesondere an den Heizkörper angebrachte elektronische Heizkostenverteiler, wie Funkheizkostenverteiler, verwendet werden, um aus der gemessenen Heizkörperübertemperatur und/oder der gemessenen bzw. abgeleiteten Raumlufttemperatur auf die Aktivität der Heizkörper rückzuschließen. Dazu kann festgestellt werden ob die Raumtemperatur und/oder eine Heizkörperübertemperatur unter einem vorgegebenen Grenzwert liegt. Im Bereich des Grenzwertes kann ferner ein gleitender Übergang zwischen einer aktiven und einer inaktiven Heizfläche mittels Bewertungsfaktoren erfolgen.

Das erfindungsgemäß vorgeschlagene Verfahren zur wärmebedarfsgeführten Adaption der Vorlauftemperatur einer Heizungsanlage, wie es vorstehend beschrieben wurde, eignet sich erfindungsgemäß auch zur Verwendung bei einer auf der Ermittlung von Versorgungszuständen basierenden Wärmeadaptionsregelung, wie sie in den EP 1 456 727 B1 oder EP 1 645 928 A1 beschrieben ist. Dazu kann ein Gesamtversorgungszustand einer Heizungsanlage, der aus einzelnen Heizflächen-Versorgungszuständen ermittelt ist, anhand des ermittelten steigenden oder fallenden Wärmebedarfs, d.h. der Wärmebedarftendenz, überprüft werden. Die einzelnen Heizflächen-Versorgungszustände werden dabei mittels Kennlinien auf der Basis der durch elektronische Heizkostenverteiler gewonnenen Daten oder aufgrund von Heizkörperventilstellungen ermittelt und durch die mit dem vorbeschriebenen Verfahren gewonnenen Erkenntnisse plausibilisiert.

In einer Weiterentwicklung der erfindungsgemäß vorgeschlagenen Verwendung kann die Überprüfung des Gesamtversorgungszustandes anhand des Massestroms, der Rücklauftemperatur oder einer durch einen Wärmezähler mit gemessenen Vorlauftemperatur erfolgen. Dabei können auch Informationen über inaktive Heizfläche und/oder bestimmte Nutzerprofile verwendet werden. Die gewonnenen Daten können auch verwendet werden, um die Gesamtversorgungszustände besser und schneller zu bestimmen, insbesondere durch eine aktive Vorlauftemperaturkorrektur.

Entsprechend dem beschriebenen Verfahren bezieht sich die Erfindung auch auf eine Vorrichtung zur wärmebedarfsgeführten Adaption der vorzugsweise außentemperaturgeführten Vorlauftemperatur einer Heizungsanlage gemäß den Merkmalen das Anspruchs 9 mit einer Messeinrichtung zur Messung des Massestroms durch die gesamte Heizungsanlage oder einzelne Heizkreise in der Heizungsanlage und der zugehörigen Rücklauftemperatur ebenfalls der gesamten Heizungsanlage oder einzelner Heizkreise. Ferner ist eine Recheneinrichtung vorgesehen, die dazu eingerichtet ist, aus diesen Messgrößen eine Wärmebedarfstendenz zu ermitteln und auf deren Grundlage die Vorlauftemperatur der Heizungsanlage und/oder der einzelnen Heizkreise vorzugeben, indem bei steigendem Wärmebedarf mit einer steigenden Vorlauftemperatur und bei fallendem Wärmebedarf mit einer sinkenden Vorlauftemperatur reagiert wird. Für den Fall einer sinkenden Vorlauftemperatur ermittelt die Recheneinheit eine Absenkungsgrenze, um welche die Vorlauftemperatur maximal abgesenkt wird.

Einfacherweise kann die Messeinrichtung ein in der Heizungsanlage integrierter Wärmezähler sein, der häufig in Heizungsanlagen ohnehin vorgesehen ist.

Ferner ist an die Vorrichtung vorzugsweise ein Außentemperatursensor angeschlossen und die Recheneinrichtung dazu eingerichtet, eine Vorlauftemperatur für die Heizungsanlage auf Basis einer außentemperaturgeführten Heizungskennlinie in Abhängigkeit von dem aktuellen Wärmebedarf zu ermitteln. Dies ist besonders vorteilhaft, da die an sich durch die Heizungsfahrkurve bzw. Heizkurve als Heizungskennlinie vorgegebene Vorlauftemperatur eine recht gute Annäherung an den tatsächlichen Wärmebedarf bietet und durch die Feststellung einer Wärmebedarfstendenz an den tatsächlichen Wärmebedarf angepasst werden kann, wobei erfindungsgemäß eine an dem Wärmebedarf orientierte Absenkgrenze ermittelt wird.

Weitere Vorteile, Merkmale und Anwendungsmöglichkeiten der vorliegenden Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezüge.

Es zeigen:

Fig.1    typische Heizungsfahrkurven (Heizkurven) außentemperaturgeführter Heizungsregler zur Vorgabe einer Heizmittelvorlauftemperatur;

Fig.2    ein Blockdiagramm eines Wärmebedarfstendenz-Reglers;

Fig.3    eine Kennlinie für die Bewertung der geschätzten Raumlufttemperatur;

Fig.4    eine Kennlinie für die Bewertung der Temperaturdifferenz eines Heizkostenverteilers;

Fig.5    eine Tabelle über das Gesamt-Massestromverhältnis in Abhängigkeit von Einzel-Massestromverhältnissen einzelner Heizkörper;

Fig.6    eine Tabelle über die Gesamt-Rücklaufübertemperatur in Abhängigkeit von Einzel-Massestromverhältnissen einzelner Heizkörper und

Fig. 7   eine grafische Darstellung der in Fig. 6 gegebenen tabellarischen Aufstellung.

Die Erfindung basiert auf dem Eingangs mit Bezug auf Fig. 2 bereits vorgestellten Tendenzen-Verfahren zur Ermittlung der Änderung des Wärmebedarfs anhand eines insbesondere durch einen Wärmezähler gemessenen Massestroms m sowie einer Rücklauftemperatur $\vartheta_{RL}$, wobei auch die Gesamtvorlauftemperatur $\vartheta_{VL}$ als Eingangsgröße Verwendung finden kann. Die aus diesen Messgrößen über eine Signalaufbereitung 1 und eine Fuzzy-Regelung 2 erhaltene Wärmebedarfstendenz $\dot{Q}_{TEND}$ wird verwendet, um die Vorlauftemperatur $\vartheta_{VL}$ bei steigendem Wärmebedarf zu erhöhen und bei fallendem Wärmebedarf abzusenken.

Da das bisher beschriebene Verfahren jedoch nur auf Veränderungen des Wärmebedarfs reagiert und das absolute Niveau des Wärmebedarfs nicht ermittelt werden kann, kann es insgesamt zu einer zu starken Absenkung der Vorlauftemperatur $\vartheta_{VL}$ kommen, die dann eine ausreichende Versorgung der Heizungsanlage mit Wärme nicht mehr leisten kann. Die Folge ist ein spürbarer Diskomfort, der erfindungsgemäß vermieden wird. Dazu wird die Kenngröße der Vorlauftemperaturanpassung, d.h. eine Absenkungsgrenze, um welche die Vorlauftemperatur maximal abgesenkt wird, allein aus den Daten des Wärmezählers abgeleitet, indem Kriterien für das Erkennen von zu vermeidenden Diskomfort-Zuständen vorgegeben werden.

Mit einem Wärmezähler wird aus der Information, die der Wärmezähler über den aktuellen Anlagenzustand zur Verfügung stellt, d.h. der $\vartheta_{VL}$, der Rücklauftemperatur $\vartheta_{RL}$ und dem Massen- bzw. Volumenstrom ($\dot{m}$ bzw v) der tatsächliche Wärmebedarf des Gebäudes ermittelt. In Abhängigkeit von dem tatsächlichen Wärmebedarf kann dann die Vorlauftemperatur $\vartheta_{VL}$ korrigiert werden.

Entsprechend dem vorgeschlagenen Verfahren setzt sich die Vorlauftemperatur $\vartheta_{VL}$ dabei aus zwei Bestandteilen zusammen:

Erstens einer witterungsgeführten Komponente, die in Abhängigkeit von der Außentemperatur berechnet wird, wobei eine Heizkurve wie in Fig. 1 dargestellt den Zusammenhang zwischen der Außentemperatur und der Vorlaufsolltemperatur $\vartheta_{VLSoll}$ bestimmt.

Zweitens eine wärmebedarfsgeführte Komponente, die in Abhängigkeit von der aktuellen Wärmebedarfstendenz $\dot{Q}_{TEND}$ ermittelt wird.

Um bei einer fallenden Wärmebedarfstendenz $\dot{Q}_{TEND}$ ein zu weites Absenken der Vorlauftemperatur $\vartheta_{VL}$ zu vermeiden, werden erfindungsgemäß die nachfolgend beschriebenen Kriterien gegebenenfalls auch in beliebiger Kombination angewendet.

Diese basieren darauf, eine Änderung der vorzugsweise durch einen Wärmezähler ermittelten Messgrößen Massestrom m, Rücklauf temperatur $\vartheta_{RL}$ und/oder daraus abgeleiteter Größen nach einer Änderung der Vorlauftemperatur $\vartheta_{VL}$ zu erfassen und auszuwerten. Alternativ können auch Verhältnisse der aktuellen Messgrößen mit Erwartungswerten oder Nennwerten gebildet werden, die gegebenenfalls auch ohne Auswertung einer Veränderung der Messgröße mit geänderter Vorlauftemperatur $\vartheta_{VL}$ Aussagen über die maximale Absenkungsgrenze zulassen. Wichtige bzw. vorteilhafte erfindungsgemäß vorgeschlagenen Möglichkeiten sind nachfolgend nacheinander aufgeführt.

In einer ersten Variante kann zur Bestimmung der Absenkgrenze die Veränderung des Massestromes $\dot{m}$ nach einer Veränderung der Vorlauftemperatur $\vartheta_{VL}$ ausgewertet werden. Dazu wird die Vorlauftemperatur $\vartheta_{VL}$ um einen gewissen Temperatursprung angehoben und die darauffolgende Veränderung des Massestromes $\dot{m}$ ausgewertet. Der Temperatursprung kann in der Größenordnung von etwa 5 K liegen, die in der Regel geeignet ist, Veränderungen in dem System zu bewirken, ohne dass diese Änderungen durch den Nutzer sofort fühlbar sind.

Sinkt in einem sich nach der Veränderung quasistationär einstellenden Zustand der Massestrom m, dann haben die in der Heizungsanlage vorhandenen Thermostatventile der Heizkörper auf die Anhebung der Vorlauftemperatur $\vartheta_{VL}$ mit einer Drosselung des Durchflusses reagiert. Die Gesamtzahl der Heizkörper befindet sich also in einem überversorgten Zustand, so dass die Vorlauftemperatur $\vartheta_{VL}$ abgesenkt werden kann.

Bleibt der Massestrom $\dot{m}$ dagegen unverändert, so ist keine Drosselung des Durchflusses durch die Thermostatventile erfolgt. Die durch die Vorlauftemperaturerhöhung ergänzend zur Verfügung gestellte Wärmeenergie wird verbraucht, d.h. die Gesamtzahl der Heizkörper befand sich vor der Erhöhung der Vorlauftemperatur $\vartheta_{VL}$ in einem unterversorgten Zustand. Eine Vorlauftemperaturabsenkung kann in diesem Fall also nicht erfolgen. Durch eine weitere, schrittweise Anhebung der Vorlauftemperatur $\vartheta_{VL}$ in festgelegten zeitlichen Abständen und Auswertung der sich im quasistationären Zustand einstellenden Massestromveränderung kann die Vorlauftemperatur $\vartheta_{VL}$ bestimmt werden, bei der die Thermostatventile beginnen, den Durchfluss zu drosseln. In diesem Zustand wurde eine dem Wärmebedarf entsprechende Vorlauftemperatur $\vartheta_{VL}$ der Heizungsanlage eingestellt. Dieser Wert stellt die Absenkgrenze für eine Vorlauftemperaturabsenkung dar.

Für eine systematische Ermittlung der Absenkungsgrenze kann daher im Falle eines durch die Beobachtung des Massestroms $\dot{m}$ erkanntes Absenkpotential die Vorlauftemperatur $\vartheta_{VL}$ solange abgesenkt werden, bis eine Unterversorgung der Heizkörper vorliegt, um anschließend durch stufenweise Erhöhung der Vorlauftemperatur $\vartheta_{VL}$ den optimalen Einstellpunkt der Vorlauftemperatur $\vartheta_{VL}$ und damit die gegenwärtig gültige Absenkungsgrenze zu ermitteln.

Als weitere Messgröße kann die Veränderung der Rücklauftemperatur $\vartheta_{RL}$ auf einen Vorlauftemperatursprung $\vartheta_{VL}$ herangezogen werden. Bei einer Absenkung der Vorlauftemperatur $\vartheta_{VL}$ um ein vorgegebenes Temperaturintervall, beispielsweise -5 K, kann die Heizungsanlage folgendes Verhalten zeigen:

Sofern die überwiegende Zahl der Thermostatventile vor und nach der Vorlauftemperaturansenkung im Eingriff steht, d.h. sich in einem optimalen Regelpunkt befindet und nicht vollständig geöffnet ist, wird die Rücklauftemperatur $\vartheta_{RL}$ steigen, da die Thermostatventile in Reaktion auf die Absenkung der Vorlauftemperatur $\vartheta_{VL}$ weiter öffnen werden. In diesem Fall ist die Absenkgrenze noch nicht erreicht und eine weitere Vorlauftemperaturabsenkung vorzugsweise um denselben Betrag kann erfolgen.

Wenn die überwiegende Zahl der Thermostatventile vor und nach der Vorlauftemperaturabsenkung ganz geöffnet sind, d.h. dem Heizkörper bereits den größtmöglichen Massestrom $\dot{m}$ zuführen, wird nach einer Absenkung der Vorlauftemperatur $\vartheta_{VL}$ auch die Rücklauftemperatur $\vartheta_{RL}$ sinken. In diesem Fall ist die Absenkungsgrenze erreicht. Um eine massive Unterversorgung der Heizkörper zu vermeiden, darf die Vorlauftemperatur nicht weiter abgesenkt werden. Vorteilhaft ist eine geringfügige Anhebung der Vorlauftemperatur.

Eine interpretationsbedürftige Situation ergibt sich, wenn durch die Vorlauftemperaturabsenkung $\vartheta_{RL}$ Heizkörperventile, die vor der Absenkung komplett abgedrosselt waren, öffnen. Dann kann unter Umständen der Fall eintreten, dass bei sinkender Vorlauftemperatur $\vartheta_{VL}$ die Rücklauftemperatur $\vartheta_{RL}$ ebenfalls sinkt, obwohl die ganz überwiegende Zahl der Thermostatventile nicht ganz geöffnet wird. Um diesen Fall zu erkennen, bietet es sich an, das vorgeschlagene Verfahren mit einer Möglichkeit zur Detektion inaktiver Heizflächen zu verbinden, um zu erkennen, ob durch die Vorlauftemperaturabsenkung Heizflächen von einem inaktiven in einen aktiven Zustand, d.h. von einem geschlossenen zu einem geöffneten Thermostatventil, wechseln. Ist dies bei einer nennenswerten Anzahl von Heizflächen der Fall, kann trotz sinkender Rücklauftemperatur $\vartheta_{RL}$ davon ausgegangen werden, dass die Absenkgrenze noch nicht erreicht ist.

Eine Möglichkeit zur Detektion inaktiver Heizflächen bei Wärmeadaptionsregelungen wird später noch ausführlich beschrieben.

Um die Absenkungsgrenze zu erkennen, kann erfindungsgemäß auch das Verhältnis von aktuellem Massestrom $\dot{m}$ zu Nennmassenstrom $\dot{m}_{Nenn}$ ermittelt werden. Da der Nennmassenstrom $\dot{m}_{Nenn}$ von den hydraulischen Gegebenheiten der Heizungsanlage abhängt, kann dieser einfacherweise nach dem Schleppzeigerprinzip ermittelt werden. Dies bedeutet, dass der im System jeweils auftretenden höchste Massestrom $\dot{m}$ jeweils als Nennmassenstrom $\dot{m}_{Nenn}$ registriert und im Weiteren verwendet wird. Aufgrund von typischen Anlagenkonfigurationen ist davon auszugehen, dass der nach diesem Prinzip ermittelte Nennmassenstrom $\dot{m}_{Nenn}$ mit dem tatsächlichen Nennmassenstrom $\dot{m}_{Nenn}$ weitgehend übereinstimmt, da in jeder Heizungsanlage beispielsweise nach einer Nachtabsenkung Situationen entstehen, in denen die Heizung mit maximaler Heizleistung arbeitet und somit den maximalen Massestrom $\dot{m}$ zur Verfügung stellt. Um besser auf dauerhaft abgedrehte Heizkörper reagieren zu können, kann als Nennmassenstrom $\dot{m}$ auch der nach dem Schleppzeigerprinzip über einen bestimmten Zeitraum, beispielweise jeweils die zurückliegenden vier Wochen, ermittelte Massestrom $\dot{m}$ verwendet werden. Hierdurch wird erreicht, dass sich der Nennmassenstrom $\dot{m}_{Nenn}$ automatisch an geänderte hydraulische Verhältnisse in der Heizungsanlage anpasst.

Durch die einzustellende Vorlauftemperaturabsenkung wird ein Massestromverhältnis $\dot{m}/\dot{m}_{Nenn}$ von etwa 0,4 angestrebt. Bei diesem Massestromverhältnis beträgt die Heizkörperleistung ca. 80% der bei der jeweiligen Vorlauftemperatur $\vartheta_{RL}$ und Nennmassenstrom $\dot{m}_{Nenn}$ möglichen Leistung, so dass die Einzelraumtemperaturregelungen bzw. Thermostatventile noch einen gewissen Regelungsspielraum aufweisen. Sofern das angestrebte Massestromverhältnis erreicht ist, ist die Absenkungsgrenze für die Vorlauftemperatur $\vartheta_{RL}$ erreicht. Ein niedrigeres Massestromverhältnis deutet auf eine zu hohe Vorlauftemperatur $\vartheta_{RL}$, ein höheres Massestromverhältnis auf eine Unterversorgung hin. Natürlich stellt das vorgenannte Massestromverhältnis keine scharfe Absenkungsgrenze dar, sondern gibt eine bevorzugte Größenordnung vor, die um den angegebenen Wert auch schwanken kann.

Gemäß einer weiteren Ausführungsform kann zur Ermittlung der Absenkungsgrenze auch das Verhältnis der aktuellen Wärmeleistung zu der erwarteten Wärmeleistung dienen. Die dem Gebäude aktuell zugeführte Wärmeleistung $\dot{Q}_{AP}$ ergibt sich unmittelbar aus den Messgrößen des in der Heizungsanlage vorgesehenen Wärmezählers. Ausgangspunkt für die Bestimmung der erwarteten Wärmeleistung $\dot{Q}_{AP,erw}$ kann vereinfacht aus der Gleichung

$$\frac{\dot{Q}_{AP,erw}}{\dot{Q}_{Nenn}} = \frac{\vartheta_L - \vartheta_A}{\vartheta_{L0} - \vartheta_{A0}}$$

hergeleitet werden, wobei $\dot{Q}_{Nenn}$ die installierte Gesamt-Heizkörpernennleistung ist, die sich nach Identifikation der jeweiligen Heizkörper aus der Summe der Heizkörpernennleistungen aller installierten Heizkörper ergibt, $\vartheta_{L0}$ die Auslegungs-Raumtemperatur und $\vartheta_{A0}$ die Auslegungs-Außentemperatur sind. Die aktuelle Raumtemperatur $\vartheta_L$ kann, wenn keine besseren Werte beispielsweise aufgrund von Temperaturfühlern vorliegen, mit der Auslegungs-Raumtemperatur $\vartheta_{A0}$ angenommen werden. Eine bessere Schätzung ergibt sich, wenn in der Anlage Heizkostenverteiler, beispielsweise Funkheizkostenverteiler (FHKV), installiert sind, aus dessen Temperaturdaten die Raumtemperatur $\vartheta_L$ bekanntermaßen abgeschätzt werden kann (vgl. beispielsweise DE 10 2005 045 198 C2). Die aktuelle Außentemperatur $\vartheta_A$ ist einfach messbar und im Rahmen außentemperaturgeführter Heizungsregelungen ohnehin bekannt.

Aus dem Vergleich der erwarteten Wärmeleistung $\dot{Q}_{AP,erw}$ und der aktuell zugeführten Wärmeleistung $\dot{Q}_{AP}$ ergibt sich das Potenzial für eine Vorlauftemperaturabsenkung. Wenn die Beziehung

$$\dot{Q}_{AP,erw} \gg \dot{Q}_{AP}$$

gilt, d.h. das Verhältnis aus aktueller Wärmeleistung $\dot{Q}_{AP}$ zu erwarteter Wärmeleistung $\dot{Q}_{AP,erw}$ viel kleiner als 1 ist, kann die Vorlauftemperatur $\vartheta_{RL}$ reduziert werden. Voraussetzung ist jedoch, dass die Vorlauftemperatur $\vartheta_{RL}$ immer noch hoch genug ist, um das Gebäude ausreichend mit Wärme zu versorgen. Daher ist zusätzlich die Veränderung des Massestroms $\dot{m}$ zu beobachten. Steigt nach einer Reduzierung der Vorlauftemperatur $\vartheta_{VL}$ der Massestrom $\dot{m}$ an, bedeutet dies, dass die Thermostatventile nun weiter geöffnet haben, vor der Vorlauftemperaturreduzierung also im Eingriff waren. Steigt der Massestrom $\dot{m}$ nicht mehr an, sind die Thermostatventile bereits vollständig geöffnet und die Vorlauftemperatur $\vartheta_{VL}$ muss wieder angehoben werden. Hier ist es für eine Beurteilung besonders vorteilhaft, wenn der Massestrom $\dot{m}$ bei vollständig geöffneten Ventilen bekannt ist. Dieser maximale Massestrom $\dot{m}$ entspricht dem bereits beschriebenen Nennmassenstrom $\dot{m}_{Nenn}$, der im Schleppzeigerprinzip ermittelt werden kann.

Nähert sich der aktuelle Massestrom $\dot{m}$ dem maximalen Massestrom bzw. Nennmassestrom $\dot{m}_{Nenn}$ an, ist die Vorlauftemperatur $\vartheta_{VL}$ anzuheben.

Die vorbeschriebenen Kriterien für die verschiedenen Möglichkeiten zur Bestimmung der Absenkungsgrenze können einfacherweise in Form von Wenn-Dann-Regeln im Rahmen einer Fuzzy-Logik formuliert werden.

Hiervon unberührt bleibt, eine Begrenzung der Vorlauftemperaturabsenkung auf beispielsweise maximal 6 K oder eine vergleichbare Grenze festzulegen, die auch relativ zu dem Vorlauftemperaturwert $\vartheta_{VL}$ der Heizungsfahrkurve gemäß Fig. 1 festgelegt werden kann.

Um wie vorstehend bereits angesprochen unterscheiden zu können, ob die durch die Heizungsanlage zur Verfügung gestellte Wärmeleistung gleichmäßig durch alle Nutzer abgenommen wird oder eine ungleichmäßige Wärmeabgabe durch wenige Nutzer erfolgt (ein Teil der Nutzer nimmt eine hohe und der andere Teil der Nutzer nur eine niedrige Wärmemenge ab), wird das folgende Vorgehen vorgeschlagen. Diese Unterscheidung der vorerwähnten Fälle ist wichtig, da bei einer gleichmäßigen Wärmeabnahme das Absenkpotential für die Vorlauftemperatur $\vartheta_{RL}$ größer ist als im Falle einer ungleichmäßigen Wärmeabnahme.

Dazu werden alle Heizkörper der gesamten Heizungsanlage bzw. eines Heizkreises des Gebäudes als ein gemeinsamer Heizkörper angesehen. Mit der Gleichung

$$\left(\vartheta_{RL} - \vartheta_L\right) = \left(\frac{\left(\vartheta_{RL} - \vartheta_L\right)_{Nenn}^{1-n} - \left(\vartheta_{VL} - \vartheta_L\right)_{Nenn}^{1-n}}{\dfrac{\dot{m}}{\dot{m}_{Nenn}}} + \left(\vartheta_{VL} - \vartheta_L\right)_{AP}^{1-n}\right)^{\frac{1}{1-n}}$$

kann die Rücklauftemperatur $\vartheta_{RL}$ diesen einen (fiktiven) Heizkörpers ermittelt werden. Dabei bedeuten $\dot{m}$ den im Rahmen des vorstehend beschriebenen Verfahrens gemessenen Massestrom und $\dot{m}_{Nenn}$ den im Schleppzeigerprinzip ermittelten Nenn-Massestrom. Die Größe n ist der in Heizungsanlagen typischer Weise bekannte Heizkörperexponent. Die Rücklaufübertemperatur $(\vartheta_{RL} - \vartheta_L)_{Nenn}$ und die Vorlaufübertemperatur $(\vartheta_{VL} - \vartheta_L)_{Nenn}$ im Nennpunkt wird aus den bekannten Auslegungsdaten ermittelt. Die Vorlauftemperatur $(\vartheta_{VL})_{AP}$ im aktuellen Arbeitspunkt wird gemessen. Die Raumtemperatur $\vartheta_L$ kann als Auslegungs-Raumtemperatur angenommen oder auf Basis von Heizkostenverteilerinformationen abgeschätzt werden.

Weicht die gemessene tatsächliche Rücklauftemperatur $\vartheta_{RL}$ von der erwarteten Rücklauftemperatur $\vartheta_{RL}$ ab, können folgende Schlussfolgerungen gezogen werden. Wenn die gemessene Rücklauftemperatur $\vartheta_{RL}$ größer ist als die berechnete Rücklauftemperatur $\vartheta_{RL}$ ist davon auszugehen, dass die Heizkörper bzw. Thermostatventile der einzelnen Heizkörper stark unterschiedlich im Eingriff stehen. Einige sind weit geöffnet, andere stark gedrosselt. In dieser Situation kann eine Absenkung der Vorlauftemperatur $\vartheta_{RL}$ nur bedingt vorgenommen werden. Die Absenkungsgrenze ist näherungsweise erreicht.

Entspricht die gemessene Rücklauftemperatur $\vartheta_{RL}$ dagegen in etwa der berechneten Rücklauftemperatur $\vartheta_{RL}$, werden alle Heizkörper näherungsweise gleichmäßig durchströmt. Dann kann die Anpassung der Vorlauftemperatur $\vartheta_{VL}$ in Abhängigkeit des Massestromverhältnisses erfolgen, wobei die Absenkung umso größer ausfallen kann, je kleiner das Massestromverhältnis ist.

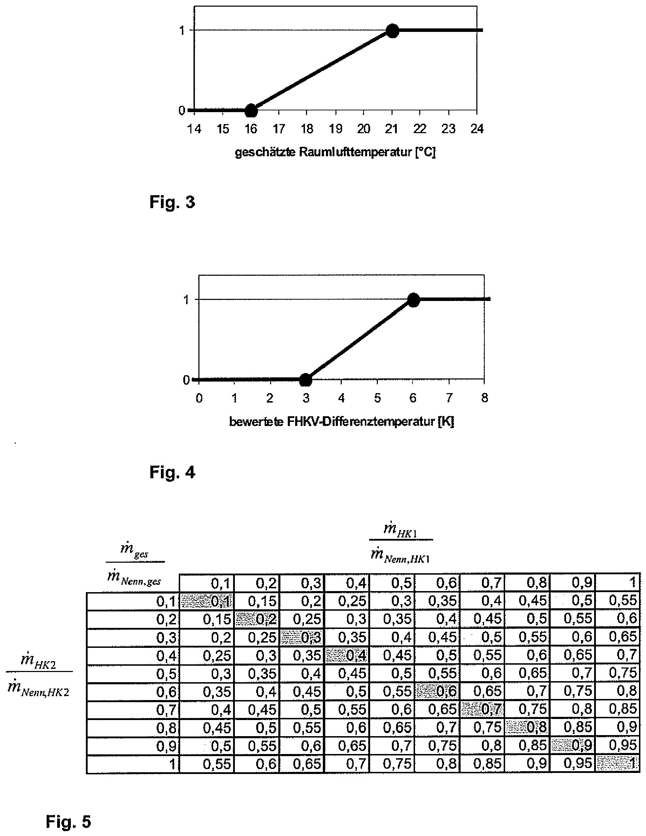

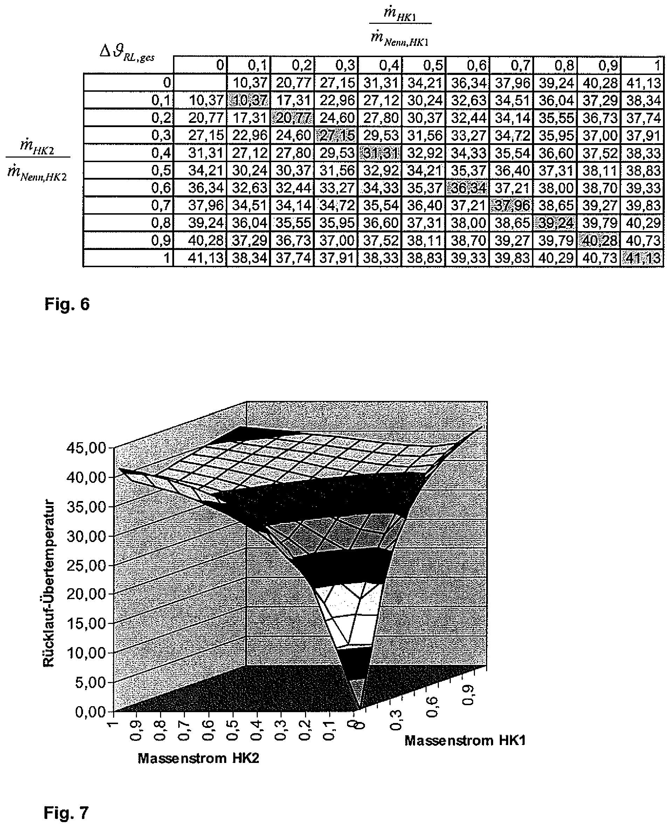

Dies wird in den Fig. 5 bis 7 verdeutlicht, die exemplarisch eine Anlage mit zwei Heizkörpern und gleichem Nennmassenstrom $\dot{m}_{Nenn}$ darstellen. Die Tabelle gemäß Fig. 5 beschreibt das Gesamt-Massestromverhältnis in Abhängigkeit der Einzel-Massestromverhältnisse der Heizkörper. Analog zeigt Fig. 6 die Gesamtrücklaufübertemperatur in Abhängigkeit der Einzelmassenstromverhältnisse der Heizkörper. Fig. 7 stellt die Werte aus Tabelle 2 in einem dreidimensionalen Diagramm dar.

Wird beispielsweise ein Gesamt-Massestromverhältnis von 0,3 ermittelt, so kann sich dies z. B. ergeben, wenn beide Heizkörper gleich stark durchströmt sind, also beide Heizkörper ein Massestromverhältnis von 0,3 haben bezogen auf den Nennmassenstrom $\dot{m}_{Nenn}$ für diesen Heizkörper. Dasselbe ergibt sich, wenn ein Heizkörper ein Massestromverhältnis von 0,5 und der andere ein Massestromverhältnis von 0,1 aufweist.

In dem erstbeschriebenen Fall wird die Gesamtrücklaufübertemperatur niedriger liegen als in dem zweiten Fall (27,15 °C zu 30,24 °C). Die mögliche Absenkung im zweiten Fall muss sich an dem Heizkörper orientieren, der das größere Massestromverhältnis und damit den größeren Wärmebedarf aufweist. So darf bei einer angestrebten Leistungsreserve von 80% ab einem Massestromverhältnis größer als 0,4 keine weitere Absenkung mehr erfolgen, bzw. eine erfolgte Vorlauftemperaturabsenkung sollte wieder zurückgenommen werden.

Sofern Heizungsanlagen mehrere Wärmezähler, beispielsweise einen pro Wohnung oder Heizkreis aufweisen, kann der Wärmebedarf einzelner oder aller Nutzeinheiten explizit erfasst werden, wobei das Verfahren analog zu Heizungsanlagen mit einem Wärmezähler bspw. für jede Nutzeinheit durchgeführt werden kann. Ein zusätzlicher Erkenntnisgewinn ergibt sich im Hinblick auf eine gleichmäßige oder ungleichmäßige Auslastung der einzelnen Heizkörper bzw. deren Wärmebedarf.

Unabhängig davon, ob ein oder mehrere Wärmezähler vorhanden sind, lassen sich als weitere Information aus der Auswertung des Massestrom- und/oder des Leistungsverlaufes Rückschlüsse über eventuelle an der Kesselregelung eingestellte Absenkzeiten (Nachtabsenkung) oder typisches Nutzerverhalten erkennen. Als Absenkzeiten gelten Zeiträume, in denen die Kesseltemperatur von der Kesselregelung reduziert wird oder der Kessel abgesehen von einer in der Regel immer aktiven Frostschutzfunktion ganz abgeschaltet wird. Besonders im letzteren Fall wird häufig auch die Heizkreis-Umwälzpumpe abgeschaltet, was am Massestrom erkennbar ist. Das Ende der Absenk- bzw. Abschaltzeit ist ebenfalls erkennbar, wann der Massestrom sprungförmig wieder ansteigt. Wenn ausreichend viele Nutzer ein wiederkehrendes Verhalten zeigen, z. B. gegen 22 Uhr die Heizkörper abdrehen und um 6 Uhr die Heizkörper wieder aufdrehen, kann dies ebenfalls anhand des Massestrom- und/ oder des Leistungsverlaufes erkannt werden, auch ohne anlagengesteuerte Absenkzeiten.

Die typischen Massestrom- und/oder Leistungsverläufe können dabei für verschiedene Profilzeiten erlernt werden, z. B. Vormittag/Nachmittag/Abend/Nacht. Zusätzlich kann noch zwischen Werktag und Wochenende bzw. Feiertag unterschieden werden, da sich auch hier typischerweise ein unterschiedliches Nutzerverhalten ergibt.

Ist das typische Nutzerverhalten bekannt, kann sich das Verfahren prädikativ auf zu erwartende Veränderung des Wärmebedarfs einstellen, bevor diese über die aus den Messwerten ermittelte Veränderung des Wärmebedarfs bzw. der Wärmebedarfstendenz überhaupt erkannt werden können. Um beispielsweise nach einer Absenkphase der Heizungsanlage eine höhere Wärmeleistung zur Verfügung zu stellen, startet das Verfahren zu Beginn der Aufheizphase, d.h. nach dem Ende einer zentralen Nachtabsenkung der Vorlauftemperatur, prädikativ mit einer erhöhten Vorlauftemperatur. Das vorgeschlagene Verfahren erkennt durch Auswertung der Wärmeleistungstendenzen, wann der Wärmebedarf des Gebäudes insgesamt wieder zurückgeht und passt die Vorlauftemperatur unter Berücksichtigung der jeweils gültigen Absenkgrenze dementsprechend an.

Auch wenn in der Heizungsanlage keine zentrale Nachtabsenkung aktiviert ist, bietet es sich dennoch an, in Übereinstimmung mit einem häufigen Nutzerverhalten jeden Morgen mit einer höheren Vorlauftemperatur zu starten, da zu erwarten ist, dass zumindest eine Vielzahl der Nutzer die Thermostatventile der Heizkörper nachts zudrehen und morgens wieder öffnen. Durch eine Erhöhung der Vorlauftemperatur wird in der morgendlichen Aufheizphase dann eine höhere Wärmeleistung zur Verfügung gestellt. Diese prädikative Erhöhung der Wärmeleistung führt in der Regel auch nicht zu einem nennenswerten Mehrverbrauch, da durch das erfindungsgemäße Verfahren die Wärmebedarfstendenz ermittelt und bei fallendem Wärmebedarf die prädikativ erhöhte Vorlauftemperatur automatisch auf die dem aktuellen Wärmebedarf angemessene Vorlauftemperatur reduziert wird.

Sofern mehrere Wärmezähler in der Heizungsanlage vorgesehen sind, kann auch das Massestromsignal des Wärmezählers ausgewertet werden, um Informationen über das Nutzungsprofil auf Wohnungsebene zu erhalten. Diese Informationen über die einzelnen Nutzungsprofile auf der Wohnungsebene könne zu einem Nutzungsprofil auf Heizkreis- oder Gebäudeebene verdichtet werden, um Absenk- und/oder Abschaltphasen des Heizkreises oder Heizkessels auch ausgehend von einem spezifischen Nutzerverhalten zuverlässig zu erkennen.

Darüber hinaus ist es vorteilhaft, Heizflächen zu erkennen, die dauerhaft oder vorübergehend inaktiv sind, beispielsweise weil in einem Abstellraum das Thermostatventil eines Heizkörpers permanent geschlossen ist, Bewohner einer Wohnung in Urlaub oder die Thermostatventile auf eine niedrige Temperatur eingestellt sind. Hierzu können Daten der an den Heizkörpern typischerweise ohnehin vorhandenen Heikostenverteiler ausgewertet werden.

So ist es möglich, die inaktiven Heizflächen bei der Bestimmung des Wärmebedarfs einer Heizungsanlage nicht zu berücksichtigen. Dies kann im Rahmen des vorliegenden Verfahrens oder auch bei einer Ermittlung von Heizflächen-Versorgungszuständen entsprechend der Offenbahrung in der EP 1 456 727 B1 oder der EP 1 645 728 A1 erfolgen. Derartige Heizflächen werden dann bei der Berechnung der Heizflächen-Versorgungszustände nicht berücksichtigt, um eine Verbesserung der Berechnung der Gebäude-Versorgungszustände zu erreichen. Bei einer zu großen Anzahl inaktiver Heizflächen könnte es ansonsten zu einer ungewünschten Beeinflussung des Gebäude-Versorgungszustandes durch diese inaktiven Heizflächen kommen, mit der Folge, dass die Vorlauftemperatur zu weit abgesenkt wird und in den beheizten Räumen unter Umständen Komforteinbußen zu verzeichnen sind.

Als Kriterium für die Ermittlung inaktiver Heizflächen anhand der Daten der Heizkostenverteiler können zwei Kriterien angewendet werden. So ist davon auszugehen, dass eine Heizfläche inaktiv ist, wenn die Differenz zwischen (bewerteter) heizkörperseitiger Temperatur und raumluftseitiger Temperatur, d.h. die Heizkörperübertemperatur $\Delta\vartheta_{FHKV}$ klein ist. Ferner kann auf eine inaktive Heizfläche geschlossen werden, wenn die geschätzte Raumlufttemperatur $\vartheta_L$ unter einem festgelegten Grenzwert liegt.

Um einen gleitenden Übergang von einem aktiven Zustand einer Heizfläche in einen inaktiven Zustand zu bewerten, können auch die in den Fig. 3 und 4 dargestellten Bewertungskennlinien definiert werden, anhand derer zwei Bewertungsfaktoren $g_{RL}$ und $g_{\Delta\vartheta}$ ermittelt werden, die wie folgt definiert sind:

$$g_{RL} = \begin{cases} 1, & \text{für } \vartheta_{RL} > 21°C \\ \tfrac{1}{5}(\vartheta_{RL} - 16), & \text{für } 16°C \leq \vartheta_{RL} \leq 21°C \text{ und} \\ 0, & \text{für } \vartheta_{RL} < 16°C \end{cases}$$

$$g_{\Delta\vartheta} = \begin{cases} 1, & \text{für } \Delta\vartheta_{FHKV} > 6°C \\ \tfrac{1}{3}\Delta\vartheta_{FHKV} - 1, & \text{für } 3°C \leq \Delta\vartheta_{FHKV} \leq 6°C, \\ 0, & \text{für } \Delta\vartheta_{FHKV} < 3°C \end{cases}$$

wobei die angegebenen und in den Fig. 3 und 4 dargestellten Werte ein bevorzugtes Beispiel zeigen und grundsätzlich frei parametrierbar sind.

Solange die bewertete Temperaturdifferenz $\Delta\vartheta_{FHKV}$ größer als 6 K ist, gilt die Heizfläche als aktiv. Ist die bewertete Temperaturdifferenz kleiner als 6 K, so wird ein Bewertungsfaktor für die Heizfläche ermittelt, der sich aus einer Fuzzy-Und-Verknüpfung der beiden Bewertungsfunktionen $g_{RL}$ und $g_{\Delta\vartheta}$ als

$$g_{HF} = \min(g_{RL}; g_{\Delta\vartheta})$$

ergibt. Diese gleitende Bewertung zwischen aktiven und passiven Heizflächen ermöglicht es, Heizflächen mit nur geringer Heizleistung adäquat bei der Ermittlung des Wärmebedarfs beispielsweise als Wärmebedarfstendenz und/oder als Versorgungszustand zu berücksichtigen.

Darüber hinaus eignet sich das erfindungsgemäß vorgeschlagene Verfahren auch zur Verwendung bei dem vorgenannten Verfahren zur Adaption der Wärmeleistung in Heizungsanlagen auf Grundlage der Versorgungszustände, in dem die Informationen des Wasserzählers über Massestrom, Vor- und Rücklauftemperatur genutzt werden, um die Genauigkeit der dort beschriebenen Verfahren zu verbessern.

So ist es möglich, die Vorlauftemperatur in höheren Etagen in Abhängigkeit des Massestroms besser abzuschätzen. Bei geringen Massenströmen erfolgt eine höhere Leitungsauskühlung als bei hohen Massenströmen. Hierdurch kann die Qualität der Schätzung der Vorlauftemperatur in insbesondere großen Heizungsanlagen mit mehreren Strängen besser abgeschätzt werden, so dass gegebenenfalls keine weiteren Vorlauftemperaturfühler in den oberen Etagen notwendig sind.

Wenn zusätzlich ein Vorlauftemperaturfühler am Strangende angebracht wird, kann aus der Wärmedifferenz zwischen Stranganfang und Strangende eine gegebenenfalls gewichtete oder gleichverteilte Temperaturverteilung der Vorlauftemperatur auf verschiedene Etagen einer größeren Heizungsanlage angewendet werden.

Ein wesentlicher Anwendungsfall für das vorliegende Verfahren bei der versorgungszustandsbasierten adaptiven Wärmeleistungsregelung liegt in einer Plausibilitätsprüfung der ermittelten Heizflächen- bzw. Gebäudeversorgungszustände. Bei einem hohen Massestrom muss der Gebäudeversorgungszustand eine Unterversorgung erkennen. Bei geringem Massestrom muss eine Überversorgung detektiert werden. Ferner kann anhand der Ermittlung der Wärmebedarfstendenz überprüft werden, ob der Gebäudeversorgungszustand eine entsprechende Änderung zeigt.

Da der Wärmezähler in der Regel schneller auf den veränderten Wärmebedarf anspricht als aus den Ventilstellungen der Heizkörper oder deren Heizflächentemperaturen ermittelte Größen, kann mit der schnelleren Trendberechnung aus der Wärmezählerinformation eine schnellere Anpassung der Vorlauftemperatur als bei den quasistationären Verfahren zur adaptiven Wärmeleistungsregelung auf Grundlage des Versorgungszustandes erfolgen.

Mit dem vorgeschlagenen Verfahren und der zur Durchführung des Verfahrens eingerichteten Vorrichtung ist es daher möglich, mit einfachen messtechnischen Mitteln eine wärmebedarfsgeführte Adaption der Vorlauftemperatur in Heizungsanlagen ohne Komforteinbußen durchzuführen, indem eine Absenkungsgrenze für die Vorlauftemperatur vorzugsweise in Abhängigkeit des derzeitigen Versorgungszustands der Heizungsanlage ermittelt wird. Dabei kann das Verfahren auch zur Plausibilisierung von Gebäudeversorgungszuständen bekannter Wärmeleistungsadaptionsregelungen verwendet werden.

Bezugszeichenliste:

| | |
|---|---|
| 1 | Signalaufbereitung |
| 2 | Fuzzy-Regler |
| 3 | Sollwertberechnung |
| $\dot{m}$ | Massestrom |
| $\dot{m}_{Nenn}$ | Nennmassestrom |
| $\dot{v}$ | Volumenstrom |
| $\vartheta_{RL}$ | Rücklauftemperatur |
| $\vartheta_{VL}$ | Vorlauftemperatur |
| $\vartheta_{VLSoll}$ | Vorlaufsolltemperatur |
| $\dot{m}_{TP}$ | tiefpassgefilterter Massestrom |
| $\dot{m}_{TEND}$ | Massestromtendenz |
| $\Delta\vartheta_{TEND}$ | Spreizungstendenz |
| $\dot{Q}_{TEND}$ | Wärmebedarfstendenz |
| $\dot{Q}_{AP}$ | aktuelle Wärmeleistung |
| $\dot{Q}_{AP,erw}$ | erwartete Wärmeleistung |
| $\dot{Q}_{Nenn}$ | Nennwärmeleistung |
| $\vartheta_{L}$ | Raumtemperatur |
| $\vartheta_{A}$ | Außentemperatur |
| $\Delta\vartheta_{FHKV}$ | Heizkörperübertemperatur |
| $g_{RL}$ | Bewertungsfaktor Raumluft |

$g_{\Delta\vartheta}$      Bewertungsfaktor Übertemperatur

**Patentansprüche**

1. Verfahren zur wärmebedarfsgeführten Adaption der Vorlauftemperatur ($\vartheta_{VL}$) einer Heizungsanlage, in welcher der Massestrom ($\dot{m}$) und die Rücklauftemperatur ($\vartheta_{RL}$) gemessen werden und hieraus eine Wärmebedarfstendenz ($\dot{Q}_{TEND}$) ermittelt wird, auf deren Grundlage die Vorlauftemperatur ($\vartheta_{VL}$) vorgegeben wird, indem bei steigendem Wärmebedarf mit einer steigenden Vorlauftemperatur ($\vartheta_{VL}$) und bei fallendem Wärmebedarf mit einer sinkenden Vorlauftemperatur ($\vartheta_{VL}$) reagiert wird, wobei für den Fall einer sinkenden Vorlauftemperatur ($\vartheta_{VL}$) eine Absenkungsgrenze ermittelt wird, um welche die Vorlauftemperatur ($\vartheta_{VL}$) maximal abgesenkt wird, **dadurch gekennzeichnet, dass** das Verhältnis aus der gemessenen Rücklauftemperatur ($\vartheta_{RL}$) und einer für den Fall berechneten Rücklauftemperatur ($\vartheta_{RL}$), dass alle Heizkörper einen virtuellen Heizkörper bilden, gebildet wird, um zu ermitteln, ob die Heizkörper gleichmäßig durchströmt sind und sich ein Absenkpotential für die Vorlauftemperatur bietet.

2. Verfahren nach Anspruch 1, **dadurch gekennzeichnet, dass** eine Änderung der Messgröße Massestrom ($\dot{m}$), Rücklauftemperatur ($\vartheta_{RL}$) und/oder daraus abgeleiteter Größen nach einer Änderung der Vorlauftemperatur ($\vartheta_{VL}$) erfasst und ausgewertet wird, um die Absenkungsgrenze der Vorlauftemperatur ($\vartheta_{VL}$) zu ermitteln.

3. Verfahren nach Anspruch 1 oder **2, dadurch gekennzeichnet, dass** das Verhältnis aus dem aktuellen Massestrom ($\dot{m}$) und einem Nennmassestrom ($\dot{m}_{Nenn}$) und/oder das Verhältnis aus der aktuellen Wärmeleistung ($\dot{Q}_{AP}$) und einer erwarteten Wärmeleistung ($\dot{Q}_{AP,erw}$) ausgewertet wird, um die Ansenkungsgrenze der Vorlauftemperatur ($\vartheta_{VL}$) zu ermitteln.

4. Verfahren nach einem der vorhergehenden Ansprüche, **dadurch gekennzeichnet, dass** durch Auswertung des Verlaufs des Massestroms ($\dot{m}$) oder der Leistung ($\dot{Q}_{AP}$) Absenzeiten der Vorlauftemperatur ($\vartheta_{VL}$) in der Heizungsanlage und/oder ein typisches Nutzerverhalten erkannt werden und daraus zeitlich prädiktiv ein steigender oder fallender Wärmebedarf abgeleitet wird.

5. Verfahren nach einem der vorhergehenden Ansprüche, **dadurch gekennzeichnet, dass** inaktive Heizkörper bei der Adaption der Vorlauftemperatur ($\vartheta_{VL}$) nicht berücksichtigt werden.

6. Verfahren nach Anspruch 5, **dadurch gekennzeichnet, dass** an den Heizkörpern angebrachte elektronische Heizkostenverteiler verwendet werden, um aus der gemessenen Heizkörperübertemperatur ($\Delta\vartheta_{FHKV}$) und/oder Raumlufttemperatur ($\vartheta_L$) auf die Aktivität des Heizkörpers rückzuschließen.

7. Verwendung eines Verfahrens zur wärmebedarfsgeführten Adaption der Vorlauftemperatur ($\vartheta_{VL}$) einer Heizungsanlage nach einem der Ansprüche 1 bis 6, **dadurch gekennzeichnet, dass** ein Gesamtversorgungszustand einer Heizungsanlage, der aus einzelnen Heizflächen-Versorgungszuständen ermittelt worden ist, anhand des ermittelten steigenden oder fallenden Wärmebedarfs überprüft wird.

8. Verwendung nach Anspruch 7, **dadurch gekennzeichnet, dass** die Überprüfung des Gesamtversorgungszustand anhand des Massestroms, der Rücklauftemperatur oder einer durch einen Wärmezähler mit gemessenen Vorlauftemperatur erfolgt.

9. Vorrichtung zur wärmebedarfsgeführten Adaption der Vorlauftemperatur ($\vartheta_{VL}$) einer Heizungsanlage mit einer Messeinrichtung zur Messung des Massestroms ($\dot{m}$) und der Rücklauftemperatur ($\vartheta_{RL}$) sowie einer Recheneinrichtung, die dazu eingerichtet ist, hieraus eine Wärmebedarfstendenz zu ermittelt und auf deren Grundlage die Vorlauftemperatur ($\vartheta_{VL}$) vorzugeben, indem bei steigendem Wärmebedarf mit einer steigenden Vorlauftemperatur ($\vartheta_{VL}$) und bei fallendem Wärmebedarf mit einer sinkenden Vorlauftemperatur ($\vartheta_{VL}$) reagiert wird, wobei die Recheneinheit dazu eingerichtet ist, für den Fall einer sinkenden Vorlauftemperatur ($\vartheta_{VL}$) eine Absenkungsgrenze zu ermitteln, um welche die Vorlauftemperatur ($\vartheta_{VL}$) maximal abgesenkt wird, **dadurch gekennzeichnet, dass** die Recheneinheit weiter dazu eingerichtet ist, das Verhältnis aus der gemessenen Rücklauftemperatur ($\vartheta_{RL}$) und einer für den Fall berechneten Rücklauftemperatur ($\vartheta_{RL}$), dass alle Heizkörper einen virtuellen Heizkörper bilden, zu bilden, um zu ermitteln, ob die Heizkörper gleichmäßig durchströmt sind und sich ein Absenkpotential für die Vorlauftemperatur bietet.

10. Vorrichtung nach Anspruch 9, **dadurch gekennzeichnet, dass** die Messeinrichtung ein in der Heizungsanlage integrierter Wärmezähler ist.

11. Vorrichtung nach Anspruch 9 oder 10, **dadurch gekennzeichnet, dass** an die Vorrichtung ein Außentemperatursensor angeschlossen ist und dass die Recheneinrichtung dazu eingerichtet ist, eine Vorlauftemperatur ($\vartheta_{VL}$) für die Heizungsanlage auf Basis einer außentemperaturgeführten Heizungskennlinie und in Abhängigkeit von dem aktuellen Wärmebedarf zu ermitteln.

**Claims**

1. A method for heat-requirement controlled adaption of the supply temperature ($\vartheta_{VL}$) of a heating system in which the mass flow ($\dot{m}$) and the return flow temperature ($\vartheta_{RL}$) are measured, and from that a heat requirement tendency ($\dot{Q}_{TEND}$) is determined on the basis of which the supply temperature ($\vartheta_{VL}$) is prescribed, in that the reaction to an increasing heat requirement is an increasing supply temperature ($\vartheta_{VL}$), and the reaction to a decreasing heat requirement is a falling supply temperature ($\vartheta_{VL}$), wherein, in the event of a falling supply temperature ($\vartheta_{VL}$) a decrease limit is determined, by which the supply temperature ($\vartheta_{VL}$) is maximally decreased, **characterised in that** the ratio of the measured return flow temperature ($\vartheta_{RL}$) and a return flow temperature ($\vartheta_{RL}$) calculated for the case that all radiators form one virtual radiator, is formed in order to determine whether the radiators are evenly flowed through and whether there is potential for decreasing the supply temperature.

2. The method according to claim 1, **characterised in that** a change to the measured variable mass flow ($\dot{m}$), the return flow temperature ($\vartheta_{RL}$) and/or values derived therefrom are recorded and evaluated following a change to the supply temperature ($\vartheta_{VL}$), in order to determine the decrease limit for the supply temperature ($\vartheta_{VL}$).

3. The method according to claim 1 or 2, **characterised in that** the ratio of the current mass flow ($\dot{m}$) and a nominal mass flow ($\dot{m}_{Nenn}$) and/or the ratio of the current heat output ($\dot{Q}_{AP}$) and an expected heat output ($\dot{Q}_{AP,erw}$), is evaluated in order to determine the decrease limit for the supply temperature ($\vartheta_{VL}$).

4. The method according to one of the preceding claims, **characterised in that** by evaluating the progression of the mass flow ($\dot{m}$) or the output ($\dot{Q}_{AP}$), decrease times for the supply temperature ($\vartheta_{VL}$) in the heating system and/or typical user behaviour can be identified and, from there, predictive timings of a rising or falling heat requirement may be derived.

5. The method according to one of the preceding claims, **characterised in that** inactive radiators are not taken into account when adapting the supply temperature ($\vartheta_{VL}$).

6. The method according to claim 5, **characterised in that** electronic heat cost allocators attached to the radiators are used in order to derive conclusions as to the activity of the radiator from the measured excess radiator ($\Delta\vartheta_{FHKV}$) heat and/or the room temperature ($\vartheta_L$).

7. A use of a method for heat-requirement controlled adaption of the supply temperature ($\vartheta_{VL}$) of a heating system according to claims 1 to 6, **characterised in that** the overall supply status of a heating system, which has been determined from the supply status of individual heating surfaces, is monitored by means of the determined rising or falling heating requirement.

8. The use according to claim 7, **characterised in that** monitoring of the overall supply status is effected with the aid of the mass flow, the return flow temperature or a heat meter with a measured supply temperature.

9. A device for heat-requirement controlled adaption of the supply temperature ($\vartheta_{VL}$) of a heating system with a measuring device for measuring the mass flow ($\dot{m}$) and the return flow temperature ($\vartheta_{RL}$) as well as a computing device which is configured so as to determine a heat requirement tendency from this and thus to predetermine the supply temperature ($\vartheta_{VL}$), in that the reaction to an increasing heat requirement is an increasing supply temperature ($\vartheta_{VL}$) and the reaction to a decreasing heat requirement is a falling supply temperature ($\vartheta_{VL}$), wherein the computing device is configured in order to determine a decrease limit in the case of a falling supply temperature ($\vartheta_{VL}$), by which the supply temperature ($\vartheta_{VL}$) is maximally decreased, **characterised in that** the computing device is further configured to determine the ratio of the measured return flow temperature ($\vartheta_{RL}$) and a return flow temperature ($\vartheta_{RL}$) calculated for the case that all radiators form one virtual radiator, is formed in order to determine whether the radiators are evenly flowed through and whether there is potential for decreasing the supply temperature.

**10.** The device according to claim 9, **characterised in that** the measuring device is a heat meter which is integrated into the heating system.

**11.** The device according to claim 9 or 10, **characterised in that** an external temperature sensor is attached to the device and that the computing device is configured in order to determine a supply temperature ($\vartheta_{VL}$) for the heating device on the basis of an external temperature led heating characteristic and depending on the current heat requirement.

**Revendications**

**1.** Procédé d'adaptation en fonction du besoin thermique de la température de départ ($\vartheta_{VL}$) d'une installation de chauffage dans laquelle le débit massique (m) et la température de retour ($\vartheta_{RL}$) sont mesures et on détermine à partir de là une tendance de besoin thermique ($Q_{TEND}$) sur la base de laquelle la température de départ ($\vartheta_{VL}$) est prédéfinis en réagissant, en cas de besoin thermique croissant, par une température de départ croissante ($\vartheta_{VL}$) et, en cas de besoin thermique décroissant, par une température de départ décroissante ($\vartheta_{VL}$), sachant que, pour le cas d'une température de départ décroissante ($\vartheta_{VL}$), on détermine une limite de décroissance à raison de laquelle la température de départ ($\vartheta_{VL}$) décroît au maximum, **caractérisé en ce que** le rapport entre la température de retour mesurée ($\vartheta_{RL}$) et une température de retour ($\vartheta_{RL}$) prévue pour ce cas, est calculé pour déterminer si les corps chauffants sont parcourus de manière homogène et s'il y a un potentiel de décroissance pour la température de départ.

**2.** Procédé selon la revendication 1, **caractérisé en ce qu'**une modification de la grandeur de mesure qu'est le débit massique (m) et/ou de grandeurs dérivées de celui-ci après une modification de la température de départ ($\vartheta_{VL}$) est détectée et exploitée pour déterminer la limite de décroissance de la température de départ ($\vartheta_{VL}$).

**3.** Procédé selon la revendication 1 ou 2, **caractérisé en ce que** le rapport entre le débit massique actuel (m) et un débit massique nominal ($m_{Nenn}$) et/ou le rapport entre la puissance thermique actuelle ($Q_{AP}$) et une puissance thermique attendue ($Q_{Ap,erw}$) est exploité pour déterminer la limite de décroissance de la température de départ ($\vartheta_{VL}$).

**4.** Procédé selon une des revendications précédentes, **caractérisé en ce que**, en exploitant l'évolution du débit massique (m) ou de la puissance ($Q_{AP}$), des durées de décroissance de la température de départ ($\vartheta_{VL}$) dans l'installation de chauffage et/ou un comportement typique d'utilisateur sont détectées et un besoin thermique croissant ou décroissant est dérivé de manière chronologiquement prédictive de ceci.

**5.** Procédé selon une des revendications précédentes, **caractérisé en ce qu'**il n'est pas tenu compte des corps chauffants inactifs lors de l'adaptation de la température de départ ($\vartheta_{VL}$).

**6.** Procédé selon la revendication 5, **caractérisé en ce qu'**on utilise des répartiteurs électroniques de frais de chauffage installés sur les corps chauffants pour déduire l'activité du corps chauffant à partir de là sur-température mesurée du corps chauffant ($\Delta\vartheta_{PHKV}$) et/ou de la température de l'air ambiant ($\vartheta_L$).

**7.** Utilisation d'un procédé d'adaptation en fonction du besoin thermique de la température de départ ($\vartheta_{VL}$) d'une installation de chauffage selon une des revendications 1 à 6, **caractérisé en ce qu'**un état d'alimentation globale d'une installation de chauffage qui a été déterminé à partir d'états individuels d'alimentation de surfaces chauffantes est contrôlé à partir du besoin thermique croissant ou décroissant déterminé.

**8.** Utilisation selon la revendication 7, **caractérisé en ce que** le contrôle de l'état d'alimentation globale a lieu sur la base du débit massique, de la température de retour ou d'une température de départ mesurée conjointement par un compteur thermique.

**9.** Dispositif d'adaptation en fonction du besoin thermique de la température de départ ($\vartheta_{VL}$) d'une installation de chauffage, comportant un dispositif de mesure pour mesurer le débit massique (m) et la température de retour ($\vartheta_{RL}$) ainsi qu'un dispositif de calcul qui est conçu pour déterminer à partir de là une tendance de besoin thermique et de prédéfinir sur sa base la température de départ ($\vartheta_{VL}$) en réagissant, en cas de besoin thermique croissant, par une température de départ croissante ($\vartheta_{VL}$) et, en cas de besoin thermique décroissant, par une température de départ décroissante ($\vartheta_{VL}$), l'unité de calcul étant conçue pour, dans le cas d'une température de départ décroissante ($\vartheta_{VL}$), déterminer une limite de décroissance à raison de laquelle la température de départ ($\vartheta_{VL}$) décroît au maximum, **caractérisé en ce que** l'unité de calcul est en outre conçue pour calculer le rapport entre la température de retour mesurée ($\vartheta_{RL}$) et une température de retour ($\vartheta_{RL}$) calculée pour le cas, que tous les corps chauffants constituent un corps chauffant virtuel afin de déterminer si les corps chauffants sont parcourus de manière homogène et s'il y a un potentiel de décroissance pour la température de départ.

**10.** Dispositif selon la revendication 9, **caractérisé en ce que** le dispositif de mesure est un compteur thermique intégré dans l'installation de chauffage.

**11.** Dispositif selon la revendication 9 ou 10, **caractérisé en ce qu'**un capteur de température extérieure est raccordé au dispositif et que le dispositif de calcul est conçu pour déterminer une température de départ ($\vartheta_{VL}$) pour l'installation de chauffage sur la base d'une caractéristique de chauffage fonction de la température extérieure et en fonction du besoin thermique actuel.

**Fig. 1**

**Fig. 2**

geschätzte Raumlufttemperatur [°C]

**Fig. 3**

bewertete FHKV-Differenztemperatur [K]

**Fig. 4**

| $\dfrac{\dot{m}_{ges}}{\dot{m}_{Nenn,ges}}$ | \multicolumn{10}{c}{$\dfrac{\dot{m}_{HK1}}{\dot{m}_{Nenn,HK1}}$} |
|---|---|---|---|---|---|---|---|---|---|---|
| | 0,1 | 0,2 | 0,3 | 0,4 | 0,5 | 0,6 | 0,7 | 0,8 | 0,9 | 1 |
| 0,1 | 0,1 | 0,15 | 0,2 | 0,25 | 0,3 | 0,35 | 0,4 | 0,45 | 0,5 | 0,55 |
| 0,2 | 0,15 | 0,2 | 0,25 | 0,3 | 0,35 | 0,4 | 0,45 | 0,5 | 0,55 | 0,6 |
| 0,3 | 0,2 | 0,25 | 0,3 | 0,35 | 0,4 | 0,45 | 0,5 | 0,55 | 0,6 | 0,65 |
| 0,4 | 0,25 | 0,3 | 0,35 | 0,4 | 0,45 | 0,5 | 0,55 | 0,6 | 0,65 | 0,7 |
| 0,5 | 0,3 | 0,35 | 0,4 | 0,45 | 0,5 | 0,55 | 0,6 | 0,65 | 0,7 | 0,75 |
| 0,6 | 0,35 | 0,4 | 0,45 | 0,5 | 0,55 | 0,6 | 0,65 | 0,7 | 0,75 | 0,8 |
| 0,7 | 0,4 | 0,45 | 0,5 | 0,55 | 0,6 | 0,65 | 0,7 | 0,75 | 0,8 | 0,85 |
| 0,8 | 0,45 | 0,5 | 0,55 | 0,6 | 0,65 | 0,7 | 0,75 | 0,8 | 0,85 | 0,9 |
| 0,9 | 0,5 | 0,55 | 0,6 | 0,65 | 0,7 | 0,75 | 0,8 | 0,85 | 0,9 | 0,95 |
| 1 | 0,55 | 0,6 | 0,65 | 0,7 | 0,75 | 0,8 | 0,85 | 0,9 | 0,95 | 1 |

$\dfrac{\dot{m}_{HK2}}{\dot{m}_{Nenn,HK2}}$

**Fig. 5**

$$\frac{\dot{m}_{HK1}}{\dot{m}_{Nenn,HK1}}$$

$\Delta\vartheta_{RL,ges}$

| | 0 | 0,1 | 0,2 | 0,3 | 0,4 | 0,5 | 0,6 | 0,7 | 0,8 | 0,9 | 1 |
|---|---|---|---|---|---|---|---|---|---|---|---|
| 0 | | 10,37 | 20,77 | 27,15 | 31,31 | 34,21 | 36,34 | 37,96 | 39,24 | 40,28 | 41,13 |
| 0,1 | 10,37 | 10,37 | 17,31 | 22,96 | 27,12 | 30,24 | 32,63 | 34,51 | 36,04 | 37,29 | 38,34 |
| 0,2 | 20,77 | 17,31 | 20,77 | 24,60 | 27,80 | 30,37 | 32,44 | 34,14 | 35,55 | 36,73 | 37,74 |
| 0,3 | 27,15 | 22,96 | 24,60 | 27,15 | 29,53 | 31,56 | 33,27 | 34,72 | 35,95 | 37,00 | 37,91 |
| 0,4 | 31,31 | 27,12 | 27,80 | 29,53 | 31,31 | 32,92 | 34,33 | 35,54 | 36,60 | 37,52 | 38,33 |
| 0,5 | 34,21 | 30,24 | 30,37 | 31,56 | 32,92 | 34,21 | 35,37 | 36,40 | 37,31 | 38,11 | 38,83 |
| 0,6 | 36,34 | 32,63 | 32,44 | 33,27 | 34,33 | 35,37 | 36,34 | 37,21 | 38,00 | 38,70 | 39,33 |
| 0,7 | 37,96 | 34,51 | 34,14 | 34,72 | 35,54 | 36,40 | 37,21 | 37,96 | 38,65 | 39,27 | 39,83 |
| 0,8 | 39,24 | 36,04 | 35,55 | 35,95 | 36,60 | 37,31 | 38,00 | 38,65 | 39,24 | 39,79 | 40,29 |
| 0,9 | 40,28 | 37,29 | 36,73 | 37,00 | 37,52 | 38,11 | 38,70 | 39,27 | 39,79 | 40,28 | 40,73 |
| 1 | 41,13 | 38,34 | 37,74 | 37,91 | 38,33 | 38,83 | 39,33 | 39,83 | 40,29 | 40,73 | 41,13 |

$\dfrac{\dot{m}_{HK2}}{\dot{m}_{Nenn,HK2}}$

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0282886 B1
- EP 0308848 B2
- EP 0260343 B1
- EP 1456727 B1
- EP 1645928 A1
- DE 102006013098 B3
- DE 102005045198 C2
- EP 1645728 A1

**In der Beschreibung aufgeführte Nicht-Patentliteratur**

- **S. BAUMGARTH.** Strategien zur energieoptimalen Heizungsregelung. *HLH,* 1991, 315-318
- Regelungsstrategien für Einzelraumregelung. *ATP,* 1995, 29-35
- **BAUMGARTH.** Einzelraumregelungen mit dem EIB. *HLH,* 2000, 42-47
- **D. PFANNSTIEHL.** Einsatz adaptiver und Fuzzy-basierter Regelungsstrategien in der Heizungstechnik. *ATP,* 1995, 42-49
- Untersuchung verschiedener Regelungskonzepte für Heizungsanlagen mit Brennwertkesseln. **J. OHL.** Dissertation. Forschungsberichte VDI, 1999, vol. 6